# EUROPÄISCHE PATENTANMELDUNG

(11) **EP 0 702 447 A2**
(43) Veröffentlichungstag der Anmeldung: **20.03.1996**
(21) Anmeldenummer: 95113296.8
(22) Anmeldetag: 24.08.1995
(51) Int. Cl.: H02K 5/15, H02K 5/14

(54) **Gehäuseloser Elektromotor mit Lagerschilden**

(30) Priorität: 26.08.1994 DE 4430411
(71) Anmelder: Licentia Patent-Verwaltungs-GmbH, D-60596 Frankfurt (DE)
(72) Erfinder: Appeldorn, Alfred, D-26209 Hatten (DE); Baumann, Günther, D-26121 Oldenburg (DE); Schneider, Hans-Joachim, D-26131 Oldenburg (DE); Steineke, Werner, D-26209 Hatten (DE)
(74) Vertreter: Vogl, Leo, Dipl.-Ing.

(57) **Zusammenfassung**

Ein kostengünstig herzustellender und zu montierender und ein geräuscharm laufender gehäuseloser Elektromotor mit mit dem Stator verbundenen Lagerschilden (3, 5) wird dadurch geschaffen, daß das Statorblechpaket (23) des Stators (1) auf dieses durchdringenden Distanzelementen mit einem Festsitz angeordnet ist, mit deren Enden (29, 31, 33, 35) die Lagerschilde (3, 5) fest verbunden sind.

Das Positionieren der Lagerschilde (3, 5 ) erfolgt hierbei über Distanzachsen (15, 17, 19, 21), die zuvor in Aufnahmebohrungen des Statorblechpaketes (23) eingetrieben wurden. Die Statorpakethöhe und die Planparallelität des geschichteten Eisenblechpaketes haben keinen Einfluß mehr auf die Motormontage.

## Beschreibung

Die Erfindung betrifft einen gehäuselosen Elektromotor mit mit dem Stator verbundenen Lagerschilden der im Oberbegriff des Patentanspruchs 1 angegebenen Art.

Es sind bereits Elektromotore mit an den Stirnseiten des Statorblechpaketes befestigten Lagerschilden bekannt, welche mit in Ausnehmungen an den Statorstirnseiten hineinragenden Vorsprüngen versehen sind.

Weiterhin ist es bekannt, bei z. B. gegossenen Lagerschilden die Vorsprünge durch Paßstifte zu bilden, die in entsprechende mit Hilfe einer Bohrlehre hergestellte Bohrungen im Lagerschild eingesetzt werden oder bei z. B. aus Blech gezogenen Lagerbügeln die Vorsprünge durch Pressen in einer Form herauszudrücken. Weiter ist bekannt, als Gußstück hergestellte Lagerschilde an ihren Anlageflächen spanabhebend zu bearbeiten und dabei im Abstand konzentrisch zur Rotorachse Zentriernocken stehen zu lassen, die in die entsprechenden Ausnehmungen an den Statorstimseiten eingeführt werden.

Der Nachteil der oben genannten Ausführungen besteht darin, daß die Lagerschilde zur Herstellung der in Ausnehmungen an den Statorstirnseiten hineinragenden Vorsprünge vor ihrer Montage verschiedene Bearbeitungsoperationen erforderlich machen, wodurch sich die Herstellungskosten erhöhen, was bei einer Massenproduktion sehr ins Gewicht fällt.

Der Erfindung liegt die Aufgabe zugrunde, einen gehäuselosen Elektromotor zu schaffen, der kostengünstig herzustellen und zu montieren ist. Hierbei soll auch die Fixierung der Lagerschilde vereinfacht werden. Diese Augabe wird durch die im Patenanspruch 1 gekennzeichneten Merkmale gelöst.

Das Positionieren der Motorlagerschilde erfolgt über Distanzbuchsen, die zuvor in das Statorpaket eingebracht wurden. Die Statorpakethöhe und die Planparallelität des geschichteten Eisens haben keinen Einfluß mehr auf die Motormontage. Die Lage der Motorbefestigungsanne an den Lagerschilden bleibt bei unterschiedlichen Eisenbreiten konstant, da sie über die Distanzachsen bestimmt wird.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben.

Es zeigen:
Figur 1 Eine Seitenansicht eines gehäuselosen Elektromotors, teilweise im Schnitt,

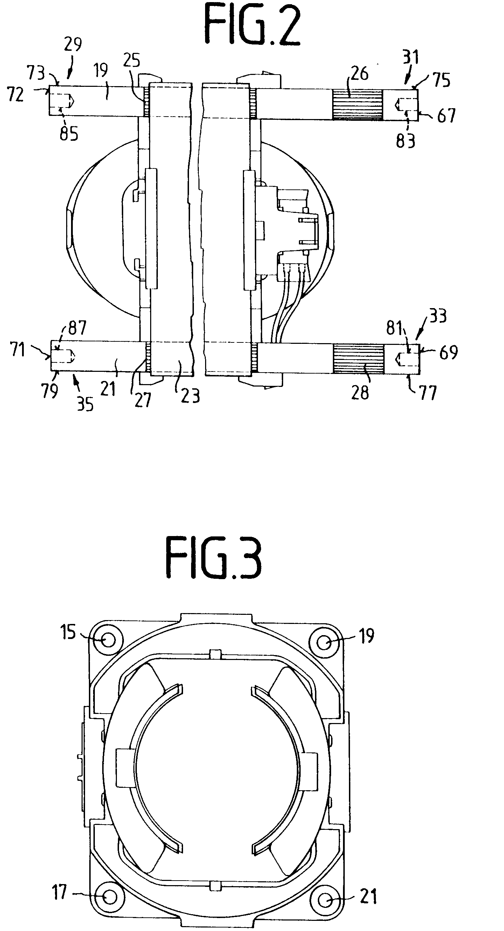

Figur 2 eine Seitenansicht auf das Ständerblelchpaket mit den Distanzachsen und
Figur 3 eine Draufsicht auf die Stirnseite des Stators.

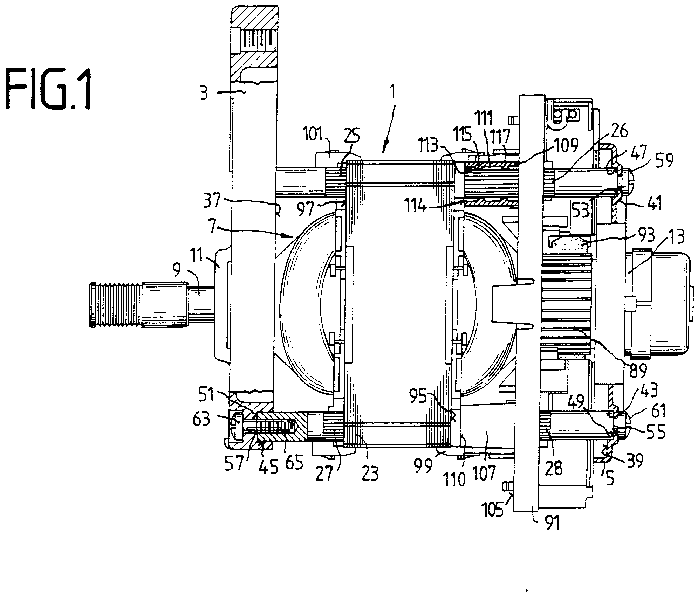

Die Figur 1 zeigt einen gehäuselosen Elektromotor mit mit dem Stator 1 verbundenen Lagerschilden 3, 5 . Ein Rotor 7 ist mit seiner Rotorwelle 9 in nicht näher dargestellten Lager 11, 13 der Lagerschilde 3, 5 in bekannter Weise drehbar gelagert. Diese Lager 11, 13 können beispielsweise aus Kugellagern bestehen. Das Positionieren der beiden Lagerschilde 3, 5 erfolgt über als Distanzelemente ausgebildete Distanzachsen 15, 17. 19, 21, auf welche das Statorblechpaket 23 mit einem Festsitz angeordnet ist. Hierbei weisen die Distzanzachsen 15, 17, 19, 21 jeweils an den Lagerstellen 25, 27 für das Statorblechpaket 23 Rändelungen in Form von Längsriefen auf, durch welche das Statorblechpaket 23 einen festen Preßsitz erhält. Im Rahmen der Erfindung kann dieser Festsitz des Statorblechpaktes auf den Distanzachsen 15, 17, 19, 21 auch durch Kleben, Schrumpfen oder durch ein sonstiges Verfahren erzielt werden. Auch können die Distanzelemente ein Dreikantprofil, eine gefaltetes Vierkantprofil oder ein sonstiges Profil aufweisen.

Die freien Enden 29, 31, 33, 35 der Distanzachsen 15, 17, 19, 21 sind mit den Innenseiten 37, 39, der Lagerschilde 3, 5 zentrierend in Anlage bringbar. Zu diesem Zweck weisen die Innenseiten 37, 39 sacklochartige Vertiefungen 41, 43, 45 zur festen Aufnahme der freien Enden 29, 31, 33, 35 der Distanzelemente auf. Die Böden 47, 49, 51 der Vertiefungen 41, 43, 45 enthalten Durchgangsbohrungen 53, 55,57 für Befestigungsschrauben 59, 61, 63 auf, welche mit ihren Gewindebolzen 65 in in die Stirnflächen 67, 69, 71, 72 an den freien Enden 29, 31, 33, 35 der Distanzachsen 15, 17, 19, 21 mündende Gewindebohrungen 81, 83, 85, 87 einschraubbar sind. Mit dem Festziehen der Befestigungsschrauben 59, 61, 63 werden die Lagerschilde 3, 5 automatisch ausgerichtet.

Eine weitere Vereinfachung des gehäuselosen Elektromotors 1 mit einem auf der Rotorwelle 9 der Rotors 7 angeordneten Kollektors 89 wird dadurch geschaffen, daß die Bürstentragplatte 91 mit den Bürsten 93 auf den sie durchsetzenden Distanzachsen 15, 17, 19, 21 zwischen dem Statorblechpaket 23 und dem Lagerschild 5 mit einem Festsitz angeordnet ist. Hierdurch wird die Endmontage des Elektromotors 1 noch weiter vereinfacht, da der Rotor 7 mit der Bürstentragplatte 91 ein Montageteil bildet. Die Stirnflächen 95, 97 des Statorblechpaketes 23 sind in bekannter Weise durch Endscheiben 99, 101 abgedeckt. Die Bürstentragplatte 91 weist auf ihrer dem Statorblechpaket 23 zugewandten Stirnseite 105 aufrecht angeordnete Lagerdome 107, 109 auf, welche mit Lagerbohrungen 111 auf den Distanzachsen 15, 17, 19, 21 fest angeordnet sind. Da die freien Stirnflächen 110, 114 der Lagerdome 107, 109 an den Endscheiben 99 anliegen, wird eine einfache Zentrierung der Bürstentragplatte 91 gewährleistet. Die Distanzachsen 15, 17, 19, 21 weisen an den Lagerstellen 26, 28 für die Bürstentragplatte 91 ebenfalls Rändelungen in Form von Längsriefen auf. Die Lagerbohrungen 111 in den Lagerdomen 107, 109 sind mit gegenüber ihren inneren Umfangsflächen 113 vorstehend ausgebildeten Ringflächen 115, 117 versehen, welche beim Aufschieben der Bürstentraplatte 91 auf die Rändelungen 26, 28 obeflächlich verformbar sind. Hierdurch wird ein einfacher, sicherer Festsitz für die Bürstentragplatte 91 auf den Distanzachsen, 15, 17, 19, 21 geschaffen.

Im Rahmen der Erfindung kann die feste Anordnung der Bürstentragplatte 91 auf den Distanzachsen 15, 17, 19, 21 auch durch andere Befestigungsverfahren wie Kleben, Schrumpfen usw. erfolgen.

## Patentansprüche

1. Gehäuseloser Elektromotor mit mit dem Stator verbundenen Lagerschilden, **dadurch gekennzeichnet**, daß das Statorblechpaket (23) des Stators (1) auf dieses durchdringenden Distanzelementen (15, 17, 19, 21) mit einen Festsitz angeordnet ist, mit deren Enden (29, 31, 33, 35) die Lagerschilde (3, 5) fest verbindbar sind.

2. Gehäuseloser Elektromotor nach Anspruch 1, **dadurch gekennzeichnet**, daß die Distanzelemente aus Distanzachsen (15, 17, 19, 21) bestehen, deren freie Enden (29, 31, 33, 35) mit den Lagerschilden (3, 5 ) zentrierend in Anlage bringbar und mit diesen fest verbindbar sind.

3. Gehäuseloser Elektromotor nach Anspruch 1, **dadurch gekennzeichnet**, daß die Distanzelemente ein Dreikantprofil, ein gefaltetes Vierkantprofil oder ein sonstiges Profil aufweisen.

4. Gehäuseloser Elektromotor nach Anspruch 2 oder 3, **dadurch gekennzeichnet**, daß die Lagerschilde, (3, 5) an ihren Innenseiten (37, 39) sacklochartige Vertiefungen (43, 45 47) zur festen Aufnahme der freien Enden (29, 31, 33, 35) der Distanzelemente aufweisen.

5. Gehäuseloser Elektromotor nach Anspruch 4, wobei die Distanzelemente aus Distanzachsen bestehen, **dadurch gekennzeichnet**, daß die Böden (47, 49, 51) der Vertiefungen (41, 43, 45) Durchgangsbohrungen (53, 55, 57) für Befestigungsschrauben (59, 61, 63) aufweisen, welche mit ihren Gewindebolzen (65) in in die Stirnflächen (67, 69, 71, 72) an deren freien Enden (73, 75, 77, 79) der Distanzachsen (15, 17, 19, 21) mündende Gewindebohrungen (81, 83, 85, 87) einschraubbar sind.

6. Gehäuseloser Elektromotor nach einem der vorhergehenden Ansprüche, wobei auf der Rotorwelle eines Rotors ein Kollektor angeordnet ist, welcher mit auf einer Bürstentragplatte gelagerten Bürsten in Eingriff steht, **dadurch gekennzeichnet**, daß die Bürstentragplatte (91) auf den sie durchsetzenden Distanzachsen (15, 17, 19, 21) zwischen dem Statorblechpaket (23 ) und dem Lagerschild (5) mit einem Festsitz angeordnet ist.

7. Gehäuseloser Elektromotor nach Anspruch 6, wobei die Stirnflächen des Statorblechpaketes durch Endscheiben abgedeckt sind, **dadurch gekennzeichnet**, daß die Bürstentragplatte (91) auf ihrer dem Statorblechpaket (23) zugewandten Stirnseite (105) aufrecht angeordnete Lagerdome (107, 109) aufweist, welche mit Lagerbohrungen (111) auf den Distanzachsen (15, 17, 19, 21) fest angeordnet sind.

8. Gehäuseloser Elektromotor nach Anspruch 7, **dadurch gekennzeichnet,** daß die freien Stirnflächen (113, 115) der Lagerdome (107, 109) an der Endscheibe (99) anliegen.

9. Gehäuseloser Elektromotor nach Anspruch 8, **dadurch gekennzeichnet**, daß die Distanzachsen (15, 17, 19, 21) an den Lagerstellen (25, 26, 27, 28) für das Statorblechpaket (23) und für die Bürstentragplatte (91) Rändelungen in Form von Längsriefen aufweisen.

10. Gehäuseloser Elektromotor nach Anspruch 9, **dadurch gekennzeichnet**, daß die Lagerbohrungen (111) in den Lagerdomen (107, 109) gegenüber ihren inneren Umfangsflächen ( 113) vorstehend ausgebildete Ringflächen (1151, 117) aufweisen, welche beim Aufschieben der Bürstentragplatte (91) auf die Rändelungen (26, 28) zur Erzielung des Festsitzes oberflächlich verformbar sind.
